# EUROPEAN PATENT APPLICATION

(11) **EP 2 833 304 A1**
(43) Date of publication of application: **04.02.2015**
(21) Application number: 14179421.4
(22) Date of filing: 01.08.2014
(51) Int. Cl.: G06Q 10/06, G06Q 30/00, G06Q 30/02

(54) **An enterprise address management system and a method thereof**

(30) Priority: 01.08.2013 US 201361861293 P
(71) Applicant: Synchronoss Technologies, Inc., Bridgewater, NJ 08807 (US)
(72) Inventor: Mendes, Mark, Purcellville, VA Virginia 20132 (US); French Smith, Susan, Littleton, CO Colorado 80124 (US); Laudati, Robert P., Port Melbourne, Victoria 3207 (AU); Dart, Peter, Yarraville, Victoria 3013 (AU); Oliver, Steven, Rosanna, Victoria 3084 (AU)
(74) Representative: Goddar, Heinz J.

(57) **Abstract**

Embodiments of the present invention relate to an enterprise address management system. In the enterprise address management system, addresses are imported and consolidated from external sources and stored in a database. The addresses are continuously updated from the same or different external sources while a history for each address is maintained to allow for retrieval and use of previous information. The history of each address is updated as a corresponding address transitions through an address life cycle as defined by a subscriber. The address life cycle typically is represented by a state model. In some embodiments, the enterprise address management system allows each subscriber to define and configure its own address life cycle state model and to control the flow of addresses through that life cycle.

## Description

### Related Applications

This application claims benefit of priority under 35 U.S.C. section 119(e) of the copending United States Provisional Patent Application Serial No. 61/861,293 filed August 1, 2013, entitled "Enterprise Address Management Platform," which is hereby incorporated by reference in its entirety.

### Field of Invention

The present invention relates to managing information about addresses. More particularly, the present invention relates to an enterprise address management system and a method thereof.

### Background of the Invention

While address databases are publicly available from numerous sources, including the U.S. Postal Service, and business data are available from business organizations, including Dun & Bradstreet, Inc., service providers require more comprehensive management of addresses and corresponding location and/or business information of those addresses so as to be able to provide proper service to their customers while maintaining and expanding their customer base.

### Brief Summary of the Invention

Embodiments of the present invention relate to an enterprise address management system. In the enterprise address management system, addresses are imported and consolidated from external sources and stored in a database. The addresses are continuously updated from the same or different external sources while a history for each address is maintained to allow for retrieval and use of previous information. The history of each address is updated as a corresponding address transitions through an address life cycle as defined by a subscriber. The address life cycle typically is represented by a state model. In some embodiments, the enterprise address management system allows each subscriber to define and configure its own address life cycle state model and to control the flow of addresses through that life cycle.

In one aspect, a non-transitory computer-readable medium is provided. The non-transitory computer-readable medium stores instructions that, when executed by a computing device, cause the computing device to perform a method. The method includes communicatively coupling with at least one external source to obtain addresses therefrom, storing the addresses in a database, managing a state of each of the addresses, wherein the state is based on a state model representing an address life cycle, and maintaining a history of each of the addresses.

In some embodiments, the method further includes continuously receiving update information. In some embodiments, the update information becomes part of the history of a corresponding address, wherein the history is also stored in the database.

In some embodiments, the method further includes, prior to the managing step, receiving definition for the state model.

In some embodiments, the method further includes obtaining user input, processing the user input and accessing the database based on the user input.

In some embodiments, the method further includes managing conflicts associated with multiple edits to an address stored in the database.

In another aspect, a system is provided. The system includes an address manager implemented on a computing device that includes a network interface that communicates with a network. The address manager typically includes an enterprise address managing platform that provides the subscribers with a single location to manage location information, an enterprise address model communicatively coupled with the enterprise address managing platform, a data mapping process that maps address data loads received via the network interface into the enterprise address model such that all addresses are stored in a uniform format, and a communication interface that receives user inputs from subscribers.

In some embodiments, the subscribers are service providers.

In some embodiments, the enterprise address management platform includes a database that stores the address data loads. The database also includes a history of each address. The history is accessible to retrieve previous information for a corresponding address. The user inputs can include query commands, update commands and create commands that transform data in the database.

In some embodiments, the communication interface includes at least one application programming interface.

In some embodiments, the address data loads are received from external address data sources and include the location information.

In some embodiments, the location information includes a plurality of addresses. The plurality of addresses can include nonaddressable locations.

In some embodiments, the address manager further includes at least one address life cycle state model that is defined by a subscriber. The at least one life cycle state model includes a plurality of states. In some embodiments, a portion of the plurality of states distinguishes between a proposed address and an existing address. In some embodiments, one of the plurality of states recognizes an address as being obsolete.

### Brief Description of the Drawings

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.
Figure 1 illustrates an exemplary address life cycle state model in accordance with some embodiments of the present invention.
Figure 2 illustrates an exemplary address management system in accordance with some embodiments of the present invention.
Figure 3 illustrates a block diagram of an exemplary computing device in accordance with an embodiment of the present invention.
Figure 4 illustrates an exemplary method in accordance with some embodiments of the present invention.

### Detailed Description of the Invention

In the following description, numerous details are set forth for purposes of explanation. However, one of ordinary skill in the art will realize that the invention can be practiced without the use of these specific details. Thus, the present invention is not intended to be limited to the embodiments shown but is to be accorded the widest scope consistent with the principles and features described herein.

Service providers do not have a single reliable source of address data within their systems. Having accurate, complete and current address and location information is critical to a service provider's success, ability to remain competitive and ability to maintain its customer base. However, a fundamental problem that service providers face is the maintenance and collection of a complete and accurate set of addresses of customers in existing and prospective service territories. Managing and reconciling that address space when addresses change - such as duplexes becoming apartments, people moving in and out of those locations, residential changing to business, or an old building being replaced by new ones - can be technically challenging and time consuming, particularly when trying to find the best and most confident data.

One location for storing and managing these addresses is in a service provider's billing system. However, the service provider's billing system likely includes only the addresses of current customers. Yet, service providers are constantly looking for new customers or clients in existing or prospective service territories. Assume a new subdivision is being built. A telecommunications company would like to get plans for the subdivision. Although addresses for the subdivision are not yet official, it is important for the telecommunications company to get those addresses in its system to start planning the cable or fiber network before the addresses become official. These "proposed" addresses are not included in the telecommunications company's billing system.

There is a need for managing an address life cycle - beginning, proposed addresses (prospective customers), established addresses (existing customer), etc. - and keeping up with address changes as the nature of these location evolves. All these factors are essential in managing not only addresses but data regarding what potential customers are at those addresses at any given point in time because services that a service provider sells to one customer (e.g., residential customer) could be very different from services that it sells to another customer (e.g., business customer).

Embodiments of the present invention relate to an enterprise address management system. In the enterprise address management system, addresses are imported and consolidated from external sources and stored in a database. The addresses are continuously updated from the same or different external sources while a history for each address is maintained to allow for retrieval and use of previous information. The history of each address is updated as a corresponding address transitions through an address life cycle as defined by a subscriber. The address life cycle typically is represented by a state model. In some embodiments, the enterprise address management system allows each subscriber to define and configure its own address life cycle state model and to control the flow of addresses through that life cycle.

A database(s) containing addresses that are imported, for example, from the U.S. Postal Service, is typically maintained by an address manager. The address manager receives updates, for example, from Dun & Bradstreet, Inc. (D&B), that enrich existing data in the database. A data subscription from D&B typically provides periodic business updates of locations, such as what entities are at those locations, what industries these entities are in, how many employees are at each location, etc. Update data does not replace existing data in the database. Rather, update data is used to enrich the existing data in the database. As each address evolves, the address transitions through different states of a state model that represents an address life cycle.

These data generally include addressable locations. However, the data can also include non-addressable locations that require services, that is, they are demand points. Exemplary non-addressable locations include those for bus stops and billboards (advertisement boards). These non-addressable locations are also imported to and maintained in the database of addresses.

In some embodiments, based on the address data being imported, a confidence level can be assigned by subscribers to each element such that on subsequent imports and merges, if a new import has elements with a lower confidence than data already in the database, then the existing data in the database would not be overwritten. In some embodiments, the elements with a lower confidence become part of the history. Confidence level can be assigned during import of address data or within a predetermined period after the import of address data.

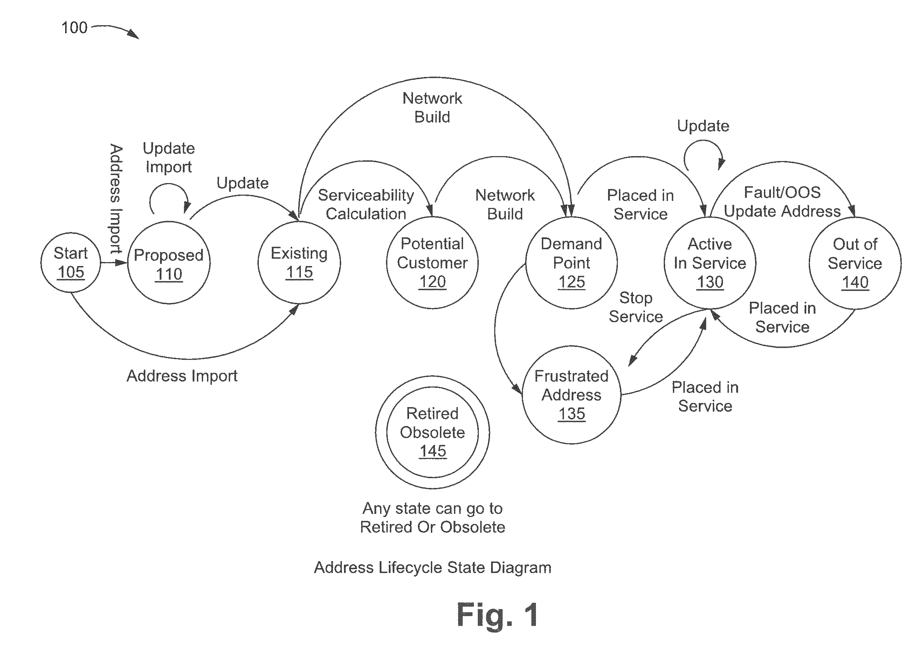

Figure 1 illustrates an exemplary address life cycle state model 100 in accordance with some embodiments of the present invention. Address life cycle state models, such as the address life cycle state model 100, are typically defined by subscribers, such as service providers of the enterprise address management system. The address life cycle state model 100 starts (State 105) by importing an address from an external source. The address can be a proposed address or an existing address. If the imported address is an existing address, the imported address becomes part of the database of addresses (State 115). If the imported address is a proposed address (such as in a new development), the proposed address remains unofficial (State 110). The proposed address can be updated with update data from the same or different external source prior to becoming part of the database of addresses (State 115).

A service provider is able to proactively build a network to service a particular territory determined by one or more addresses in the database (State 125). Typically, the service provider is able to use this subset of addresses to formulate the best engineered, lowest cost network design.

Alternatively, the service is able to reactively build a network to service a particular property by waiting for contact by a customer associated with an address in the database. A serviceability calculation can be performed to determine whether the customer is a potential customer. In some embodiments, the service qualification check uses network analysis to determine whether or not the property at the address can be serviced. After it is established that the property can indeed be serviced (State 120), the service provider builds a network to service that property (State 125).

After the network is built, either proactively or reactively, service is placed in the network (State 130). It is possible that, after the network is built but before the service is placed in the network, the customer no longer wants the service (State 135).

After the service becomes active (State 130), the service can become inactive for various reasons. For example, the customer no longer wants the service (State 135). For another example, a tree has fallen causing a service outage (State 140). However, from State 135 and from State 140, the service can be placed back in the network again when the customer reactivates the service and when the services comes back up from the outage at that location, respectively.

When the service in the network is active (State 130), data regarding the customer, and thus the corresponding location, is updated with update data from the same or different external source. For example, the customer may change or upgrade the services at the address. For another example, a hair studio becomes a coffee shop. The ability to easily update a customer with current information, whether it comes from a manual editor or an integration with a billing system or other downstream applications (e.g., telecommunications applications) is critical.

In the address life cycle represented by the state model 100, the address can become obsolete (State 145) at any point in time. For example, a building is demolished and the location is transformed into a parking lot. The State 145 is an important distinction that enables the service provider to understand that an address has gone through the address life cycle.

Although nine states are shown in the address life cycle state model 100, more or less states are possible. As discussed elsewhere, each subscriber is able to define its own address life cycle.

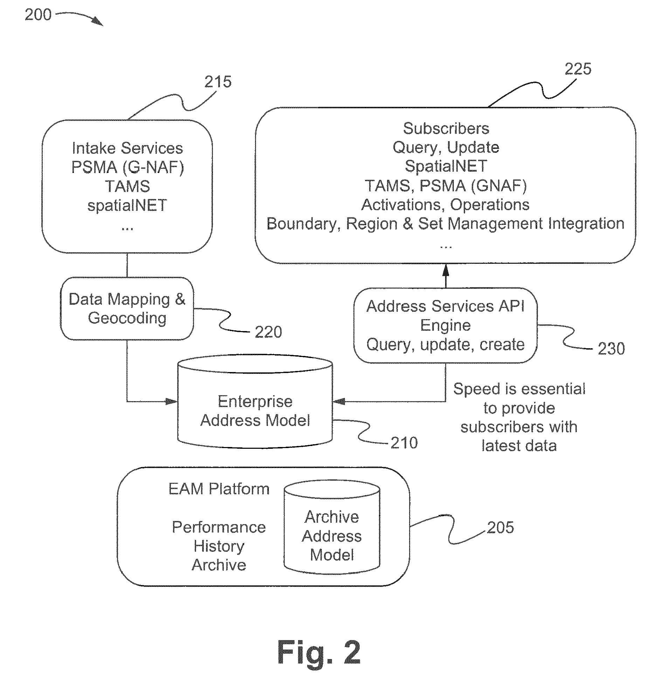

Figure 2 illustrates an exemplary address management system 200 in accordance with some embodiments of the present invention. The address management system (AMS) 200 includes an enterprise address management (EAM) platform 205. The EAM platform 205 includes at least one database, labeled as Archive Address Model in Figure 2, and a plurality of functionalities relating to performance, history and archival. The database stores address data and address life cycle state models. The database can also store subscriber information. The AMS 200 also includes an enterprise address model 210 is coupled with the EAM platform 205. The enterprise address model 210 is typically the front-end of the address manager, while the EAM platform 2015 is typically the back-end of the address manager.

The AMS 200 includes two forms of input into the enterprise address model 210: intake services 215 and subscribers 225. On one side of the AMS 200, the intake services 215 are external systems (e.g., PSAM (G-NAF), TAMS, spatialNET, etc.) that provide address data loads, which feeds into a data mapping and geocoding process(es) 220. The process(es) 220 maps the address data loads into the enterprise address model 210 such that all addresses can be stored in a uniform format in the database. In some embodiments, the system 200 is globalized such that any format of address can be managed. On the other side of the AMS 200, the subscribers 225 are service providers (e.g., people or entities) that request information regarding address update or notice of activation or boundary changes or status changes or the like through application programming interface(s) and/or web services 230. The enterprise address model 210 provides the requested information to the subscribers 225 through the application programming interface(s) and/or web services 230. The application programming interface(s) and/or web services 230 include at least one communication interface that receives user inputs from the subscribers 225. In some embodiments, the user inputs include query commands, update commands and create commands that transform the data that is stored in the database.

The EAM platform 205 maintains subscriber information and provides the subscribers with a single location to manage their location information. Traditional systems in place at fiber network and telecommunications companies view address/location data as an element belonging to other objects, such as billing, fiber network design, customer relationship management (CRM) and asset inventory. In contrast, the EAM platform 205 views the address/location data as an enterprise asset belonging to all but owned by none.

The management of the address/location asset becomes complex when the following issues are considered:
- mass updates from external sources (acquisitions of new network(s), customers; source data updates);
- historical versions and audits for litigation purposes;
- supporting the complete address life cycle; and
- enabling security and life cycle configuration to prevent users from modifying addresses unless the address is in a valid state and the editor is cleared to perform the edit.
However, the EAM platform 205 provides for:
- historical and audit trails;
- aggregation of multiple data sources into a single location reference;
- control and coordinate modifications from multiple systems;
- dissemination of modifications to subscribing systems;
- high performance to enable real time access;
- complete and comprehensive data model to support all addressing activities required by business components; and
- manage conflicts associated with multiple edits to the same address.

The address management system 200 includes three main entities. In some embodiments, the address manager is responsible for the EAM platform 205, the enterprise address model 210, the data mapping and geocoding process(es) 220, and the application programming interface(s) and/or web services 230. The three main entities - address manager, the intake services 215 (e.g., external sources) and the subscribers 225 (e.g., the service providers) - are communicatively coupled via a network. Service providers include, but are not limited to, utilities providers (e.g., water, electricity, garbage, phone, Internet, etc.), commercial providers (e.g., newspaper) and personal care providers (e.g., landscaping, housekeeping, etc.). Other service providers are contemplated.

In some embodiments, the address management system 200 includes a long transaction environment that allows for version control of addresses. This version control feature is different than the history feature discussed elsewhere. This version control feature pertains to the management of data while it goes through the state model such that it can be controlled when it becomes visible to others to be used in other operations, when it can be modified by others, and when it is "published" to the top level of the database. Multiple users are able to log into the long transaction environment to edit data simultaneously.

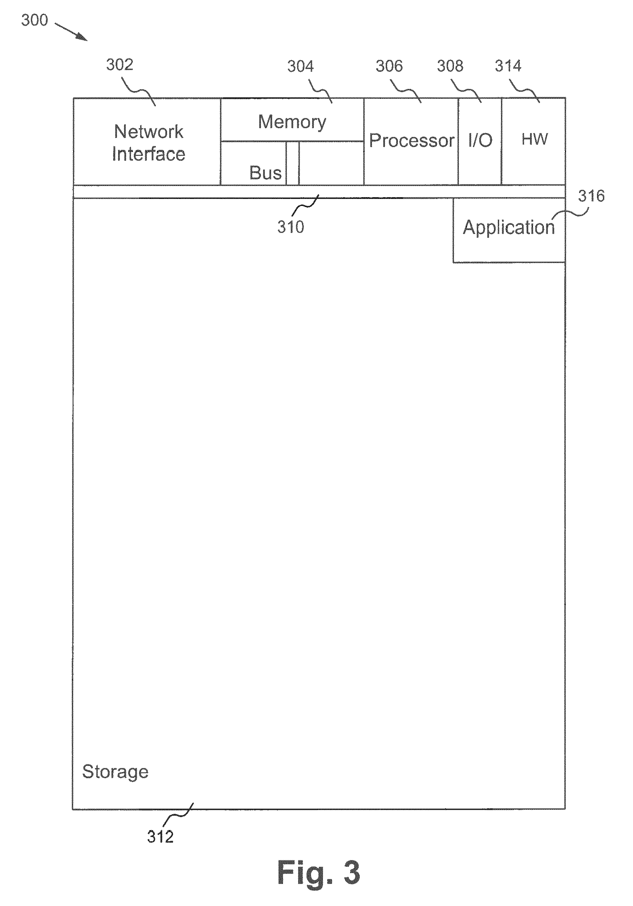

Figure 3 illustrates a block diagram of an exemplary computing device 300 in accordance with an embodiment of the present invention. The computing device 300 is able to be used to acquire, cache, store, compute, search, transfer, communicate and/or display information. The address manager is implemented on the computing device 300 or a plurality of computing devices 300.

In general, a hardware structure suitable for implementing the computing device 300 includes a network interface 302, a memory 304, processor(s) 306, I/O device(s) 308, a bus 310 and a storage device 312. The choice of processor 306 is not critical as long as a suitable processor with sufficient speed is chosen. In some embodiments, the computing device 300 includes a plurality of processors 306. The memory 304 is able to be any conventional computer memory known in the art. The storage device 312 is able to include a hard drive, CDROM, CDRW, DVD, DVDRW, flash memory card, RAM, ROM, EPROM, EEPROM or any other storage device. The computing device 300 is able to include one or more network interfaces 302. An example of a network interface includes a network card connected to an Ethernet or other type of LAN. The I/O device(s) 308 are able to include one or more of the following: keyboard, mouse, monitor, display, printer, modem, touchscreen, button interface and other devices. Address manager application(s) 316 is likely to be stored in the storage device 312 and memory 304 and are processed by the processor 306. More or less components shown in Figure 3 are able to be included in the computing device 300. In some embodiments, hardware 314 for implementing the address manager is included. Although the computing device 300 in FIG. 3 includes applications 316 and hardware 314 for implementing the address manager, the address manager is able to be implemented on a computing device in hardware, firmware, software or any combination thereof. For example, in some embodiments, the address manager software 316 is programmed in memory and executed using a processor. In another example, in some embodiments, the address manager hardware 314 is programmed hardware logic including gates specifically designed to implement the method(s) discussed herein.

The computing device 300 can be a server, a tablet, a mobile phone, a smart phone, a desktop computer, a laptop computer, a netbook, or any suitable computing device such as special purpose devices.

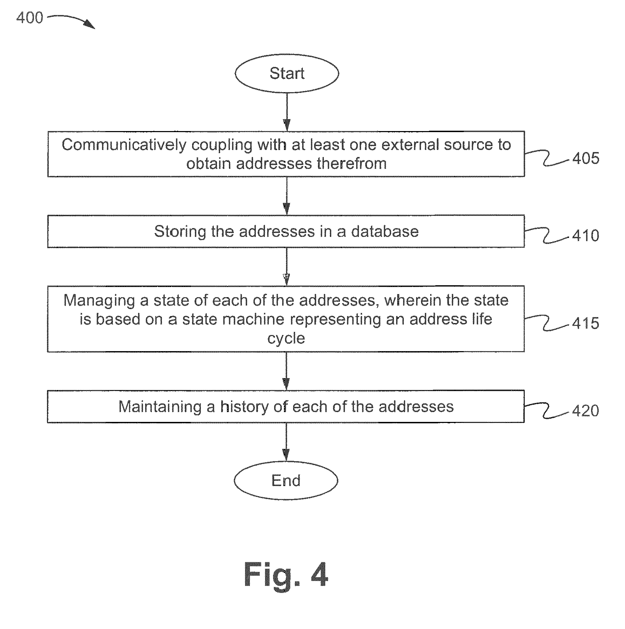

Figure 4 illustrates an exemplary method 400 in accordance with some embodiments of the present invention. The method 400 is typically implemented by the address manager. The method 400 begins at a Step 405, wherein at least one external source is communicatively coupled with to obtain addresses therefrom.

At a Step 410, the addresses are stored in a database.

At a Step 415, a state of each of the addresses is managed. The state is based on a state model, which represents an address life cycle. Typically, the address life cycle state model is uniquely defined and configured by a subscriber. As such, prior to the Step 415, definition for the address life cycle state model is received from the subscriber.

At a Step 420, a history of each of the addresses is maintained. In some embodiments, update information is continuously received from the same or different external source. The update information becomes part of the history of the corresponding address. If the subscriber is not confident with the update information for an address, the history allows for retrieval of previous information regarding the corresponding address. In some embodiments, the history is also stored in the database.

In some embodiments, user input is obtained and processed. The database is accessed based on the user input to retrieve and/or modify the data in the database. In some embodiments, conflicts associated with multiple edits to an address stored in the database are managed.

One of ordinary skill in the art will realize other uses and advantages also exist. While the invention has been described with reference to numerous specific details, one of ordinary skill in the art will recognize that the invention can be embodied in other specific forms without departing from the spirit of the invention. Thus, one of ordinary skill in the art will understand that the invention is not to be limited by the foregoing illustrative details, but rather is to be defined by the appended claims.

## Claims

1. A non-transitory computer-readable medium storing instructions that, when executed by a computing device, cause the computing device to perform a method, the method comprising:
a. communicatively coupling with at least one external source to obtain addresses therefrom;
b. storing the addresses in a database;
c. managing a state of each of the addresses, wherein the state is based on a state model representing an address life cycle; and
d. maintaining a history of each of the addresses.

2. The non-transitory computer-readable medium of Claim 1, wherein the method further comprises continuously receiving update information, wherein the update information becomes part of the history of a corresponding address, wherein the history is also stored in the database.

3. The non-transitory computer-readable medium of Claim 1, wherein the method further comprises, prior to the managing step, receiving definition for the state model.

4. The non-transitory computer-readable medium of Claim 1, wherein the method further comprises obtaining user input, processing the user input and accessing the database based on the user input.

5. The non-transitory computer-readable medium of Claim 4, wherein the method further comprises managing conflicts associated with multiple edits to an address stored in the database.

6. A system comprising an address manager implemented on a computing device that includes a network interface that communicates with a network, wherein the address manager includes:
a. an enterprise address managing platform that provides the subscribers with a single location to manage location information;
b. an enterprise address model communicatively coupled with the enterprise address managing platform;
c. a data mapping process that maps address data loads received via the network interface into the enterprise address model such that all addresses are stored in a uniform format; and
d. a communication interface that receives user inputs from subscribers.

7. The system of Claim 6, wherein the subscribers are service providers.

8. The system of Claim 6, wherein the enterprise address management platform includes a database that stores the address data loads and a history of each address, wherein the history is accessible to retrieve previous information for a corresponding address.

9. The system of Claim 8, wherein the user inputs include query commands, update commands and create commands that transform data in the database.

10. The system of Claim 6, wherein the communication interface includes at least one application programming interface.

11. The system of Claim 6, wherein the address data loads are received from external address data sources and include the location information.

12. The system of Claim 6, wherein the location information includes a plurality of addresses, wherein the plurality of addresses includes nonaddressable locations.

13. The system of Claim 6, wherein the address manager further includes at least one address life cycle state model that is defined by a subscriber.

14. The system of Claim 13, wherein the at least one life cycle state model includes a plurality of states, wherein a portion of the plurality of states distinguishes between a proposed address and an existing address.

15. The system of Claim 14, wherein one of the plurality of states recognizes an address as being obsolete.
